# EUROPEAN PATENT SPECIFICATION

(11) **EP 3 102 640 B1**
(45) Date of publication and mention of the grant of the patent: **07.06.2023**
(21) Application number: 15706576.4
(22) Date of filing: 04.02.2015
(51) Int. Cl.: C09D 5/02

(54) **COATING COMPOSITIONS AND METHODS FOR SOUND AND VIBRATION DAMPING AND WATER RESISTANCE**
BESCHICHTUNGSZUSAMMENSETZUNGEN UND VERFAHREN ZUR GERÄUSCH- UND SCHWINGUNGSDÄMPFUNG SOWIE WASSERBESTÄNDIGKEIT
COMPOSITIONS DE REVÊTEMENT ET PROCÉDÉS D'ATTÉNUATION DU BRUIT ET D'AMORTISSEMENT DES VIBRATIONS ET DE RÉSISTANCE À L'EAU

(30) Priority: 04.02.2014 US 201414172066
(43) Date of publication of application: 14.12.2016
(73) Proprietor: PPG Industries Ohio, Inc., Cleveland, OH 44111 (US)
(72) Inventor: BOWLES, Steven E., Pittsburgh, Pennsylvania 15215 (US); CHAO, Tien-Chieh, Mars, Pennsylvania 16046 (US); DESAI, Umesh C., Wexford, Pennsylvania 15090 (US); MAS, Merce, E-08208 Sabadell (ES)
(74) Representative: f & e patent
(86) International application number: PCT/US2015/014447
(87) International publication number: WO 2015/120042

(56) References cited:
- EP-A1- 1 369 434
- WO-A1-01/90264
- US-A1- 2004 211 934
- DATABASE WPI Week 201011 Thomson Scientific, London, GB; AN 2009-S69417 XP002738723, -& KR 2009 0127497 A (DONGBU FINE CHEM CO LTD) 14 December 2009 (2009-12-14)
- DATABASE WPI Week 201431 Thomson Scientific, London, GB; AN 2014-E92878 XP002738724, -& CN 103 525 235 A (HUAINAN TEACHERS COLLEGE) 22 January 2014 (2014-01-22)

## Description

### FIELD

The present invention relates to coating compositions that provide water resistance and are suitable for sound and vibration damping.

### BACKGROUND

Typically, precut asphalt- or rubber-based patches are used for lining floor pans, deck lids and doors of automobiles to dampen or reduce road and engine noise and vibrations, preventing them from permeating into the passenger compartment of the motor vehicle. Sprayable coatings which are capable of being applied by robotics are desirable to provide labor and cost savings, reduced part inventories and flexibility in design specifications for damping properties.

Generally, any coating that contains a volatile component such as water must undergo a decrease in volume as the volatile component evaporates from the surface of the coating. As the volatile component leaves the coating, contraction forces act to pull the coating inward in all directions. However, without intending to be bound by any theory, it is believed that if the coating has sufficient cohesive strength, the coating will contract in only one dimension, that is, the coating thickness will decrease while the coating resists contraction in any direction parallel to the substrate surface. By contrast, if a coating lacks cohesive strength sufficient to resist contraction parallel to the substrate surface, contraction forces will cause the coating to break up into small flat segments that are separated by continuous linear voids. This surface defect is commonly referred to as "mudcracking".

In addition, exposure of coatings to water can cause damage to the coating and water absorption that may increase coating weight

KR 2009 0127497 A relates to composition for metal surface treatment and a composition for water-based metal surface treatment are provided to ensure excellent solution stablility, chemical resistance and lubrication, and to impart excellent corrosion resistance, abrasion resistance and powder coating property. CN 103 525 235 A relates an aqueous rust-removal and rustproof nano coating and a preparation method thereof. WO 01/90264 A1 provides coating compositions including aqueous dispersions of polymeric microparticles prepared from nitrile, carbamate and amide functional materials, polyoxyalkylene acrylates and/or hydroxy functional materials, which are useful for sound deadening applications. US 2004/211934 A1 relates to presence of expandable microspheres in an aqueous coating composition comprised of at least one dispersed polymer and at least one inorganic filler helps to improve the appearance and/or sound damping properties of the coating obtained by heating the aqueous coating composition after it has been applied to a substrate surface. EP 1 369 434 A1 relates to reactive surfactants containing a branched aliphatic hydrocarbon group, a secondary aliphatic hydrocarbon group or a branched aliphatic acyl group, and also to their specific applications.

### SUMMARY

A coating composition for sound and vibration damping is provided, the coating composition comprising: (a) an aqueous dispersion of polymeric microparticles prepared from components comprising a non-migrating surfactant comprising a phosphonate ester; and (b) a filler material comprising 40% to 80% by weight based on the total weight of the coating composition.

A coating is provided, the coating comprising: (a) an aqueous dispersion of polymeric microparticles prepared from components comprising a non-migrating surfactant comprising a phosphonate ester; and (b) a filler material comprising 40% to 80% by weight based on the total weight of the composition.

A method for sound and vibration damping through a substrate is provided, the method comprising: (a) applying to the substrate a coating composition comprising an aqueous dispersion of polymeric microparticles prepared from components comprising a non-migrating surfactant comprising a phosphonate ester; and a filler material comprising 40% to 80 % by weight based on the total weight of the coating composition; and (b) at least partially drying the coating composition.

### DETAILED DESCRIPTION

As used herein, unless otherwise expressly specified, all numbers such as those expressing values, ranges, amounts or percentages may be read as if prefaced by the word "about", even if the term does not expressly appear. It is also understood that a plural term can encompass its singular counterpart and vice versa. Plural encompasses singular and vice versa. For example, although reference is made herein to "an" aqueous dispersion, "a" non-migrating surfactant, "a phosphonate ester,", and "a" filler material, a combination (a plurality) of these components can be used in the present invention.

As used herein, "includes" and like terms means "including without limitation."

When referring to any numerical range of values, such ranges are understood to include each and every number and/or fraction between the stated range minimum and maximum.

As used herein, unless indicated otherwise, the term "substantially free" means that a particular material is not purposefully added to a composition, and is only present in trace amounts or as an impurity. As used herein, unless indicated otherwise, the term "completely free" means that a composition does not comprise a particular material. That is, the composition comprises 0 weight percent of such material.

As used herein, the term "aqueous dispersion" means that the microparticles are capable of being distributed throughout water as finely divided particles, such as a latex. See Hawley's Condensed Chemical Dictionary, (12th Ed. 1993) at page 435, which is hereby incorporated by reference. The uniformity of the dispersion can be increased by the addition of wetting, dispersing or emulsifying agents (surfactants), which are discussed below.

As used herein, the term "polymer" is meant to refer to prepolymers, oligomers and both homopolymers and copolymers; the prefix "poly" refers to two or more.

As used herein, the terms "on," "applied on/onto," "formed on," "deposited on," mean formed, overlay, deposited, or provided on but not necessarily in contact with the surface. For example, a coating layer "formed over" a substrate does not preclude the presence of one or more other coating layers of the same or different composition located between the formed coating layer and substrate.

As used herein, the term "non-migrating surfactant" means that the surfactant contains a functional group that covalently bounds into the polymeric nanoparticle and helps stabilize the polymeric microparticle in the aqueous medium.

As used herein, the term "migrating surfactant" means that the surfactant does not contain a polymerizable functional group and stabilizes the polymeric microparticle in the aqueous medium by non-bonding interactions.

Glass transition temperature (T*_{g}*) (°C) is determined using a Differential Scanning Calorimeter (DSC), for example a Perkin Elmer Series 7 Differential Scanning Calorimeter, using a temperature range of -55°C to 150°C and a scanning rate of 20°C per minute.

A coating composition for sound and vibration damping is provided comprising (a) an aqueous dispersion of polymeric microparticles prepared from components comprising a non-migrating surfactant comprising a phosphonate ester; and (b) a filler material comprising 40% to 80% by weight based on the total weight of the coating composition.

In embodiments, the polymeric microparticles may be thermoplastic, although the polymeric microparticles can include functionality which would permit crosslinking with suitable crosslinking agents such as aminoplasts and polyisocyanates. The polymeric microparticles are essentially hydrophobic but have some hydrophilic character to enable dispersion in water.

The polymeric microparticles may be prepared from components comprising a non-migrating surfactant comprising a phosphonate ester. As used herein, the term "phosphonate ester" includes phosphonate esters, phosphonate diesters, phosphonate monoesters, phosphonic acids, phosphate salts, or combinations thereof. In examples, the phosphonate ester may be vinyl phosphate, oleyl alcohol ethoxylate phosphate (Tradename: Maxemul 6106 and 6112, Sinonate 1204P by Sino-Japan Chemicals, MaxChem WA-7394 by PCC-Chemax, and Phosphetal OAX by Zschimmer & Schwatz, Inc, or combinations thereof. In embodiments, the non-migrating surfactant further comprises a polyether chain of various lengths from 1 to 40 repeating ethyleneoxy or propyloxy units. The phosphonate ester may generally comprise 0.5% to 4.5% by weight based on the monomeric weight of the components used to prepare the polymeric microparticles, such as 1% to 2.5% by weight.

In embodiments, in lieu of or in addition to the phosphonate esters discussed above, the polymeric microparticles may be prepared from components comprising a non-migrating surfactant comprising a linear or a branched alkyl chain containing 8 to 22 carbons and at least one acrylate-reactive functional group, such as, for example, a (meth)acrylic, alkyl (meth)acrylic, vinyl, styrenic monomers group, or combinations thereof. An example of such a component may be oleyl alcohol ethoxylate phosphate.

In embodiments, in addition to the non-migrating surfactants discussed above, the polymeric microparticles may be prepared from components comprising a migrating surfactant. The migrating surfactant may be ionic or non-ionic. Examples of the migrating surfactant include sodium bis(2-ethylhexyl) sulfosuccinate, ammonium salt of sulfated alcohol ethoxylated, ammonium nonoxynol-4-sulfate, and nonyl phenol ethoxylate, or combinations thereof. The migrating surfactant may generally comprise 0.1% to 1% by weight based on the monomeric weight of the components used to prepare the polymeric microparticles, such as 0.25% to 0.5% by weight. In other embodiments, in addition to the non-migrating surfactants discussed above, the polymeric microparticles may be prepared from components comprising one or more nitrile materials, such as acrylonitrile, methacrylonitrile, macromonomers, copolymers, esters thereof, nitrile rubbers and mixtures thereof. Useful nitrile materials also include polymers including both vinyl and nitrile groups. Transesterification products of cyanoacetic acid with hydroxyl functional materials are also useful. The nitrile functional material generally comprises 1% to 95 % by weight based on the monomeric weight of the components used to prepare the polymeric microparticles, such as 15% to 40% by weight.

In other embodiments, in addition to the non-migrating surfactants discussed above, the polymeric microparticles may be prepared from components comprising one or more amide functional materials, such as (meth)acrylamides or n-butoxy methacrylamide and polymers and copolymers thereof present in similar amounts to the nitrile materials discussed above. The amide functional material generally comprises 1% to 95 % by weight based on the monomeric weight of the components used to prepare the polymeric microparticles, such as 15% to 40 % by weight.

In other embodiments, in addition to the non-migrating surfactants discussed above, carbamate functional materials can be included in the polymeric microparticles, for example by copolymerizing the non-migrating surfactant with a carbamate functional vinyl monomer, such as a carbamate functional alkyl ester of methacrylic acid, or by reacting a hydroxyl functional acrylic polymer with a low molecular weight carbamate functional material, such as can be derived from an alcohol or glycol ether, via a transcarbamoylation reaction. Other useful carbamate functional monomers are disclosed in U.S. Pat. No. 5,098,947, which is incorporated herein by reference. The carbamate functional material generally comprises 1% to 95 % by weight based on the monomeric weight of the components used to prepare the polymeric microparticles, such as 15% to 40 % by weight.

In other embodiments, the components used to prepare the polymeric microparticles may further comprise one or more polyoxyalkylene acrylates which can reduce mudcracking in the coating composition. Generally, the polyoxyalkylene acrylate comprises a backbone of repeating alkylene glycol units. The polyoxyalkylene acrylate can be terminated at one end with an acrylate group and at the other end with an alkoxy group containing 1 to 6 carbon atoms. The polyoxyalkylene acrylate can further comprise one or more pendant functional groups such as hydroxy, amido, carboxy, carbamate, urea, mercapto or urethane. The polyoxyalkylene acrylate may have one or more terminal alkoxy groups such as methoxy groups, ethoxy groups, butoxy groups, pentoxy groups and hexoxy groups.

Non-limiting examples of suitable polyoxyalkylene acrylates include alkoxy polyoxyethylene acrylates, alkoxy polyoxyethylene methacrylates, alkoxy polyoxypropylene acrylates, alkoxy polyoxypropylene methacrylates, alkoxy polyoxyethyleneoxypropylene acrylates, alkoxy polyoxyethyleneoxypropylene methacrylates, alkoxy polyoxybutylene acrylates, alkoxy polyoxybutylene methacrylates, copolymers and mixtures thereof. In an embodiment, the polyoxyalkylene acrylate may be methoxy polyoxyethylene methacrylate (also known as methoxy polyethylene glycol methacrylate). In another embodiment, the methoxy polyethylene glycol methacrylate may be MA-550 which is commercially available from La Porte Chemicals, Houston, Tex.

The polyoxyalkylene acrylate can comprise 1% to 99% by weight based on the monomeric weight of the components used to prepare the polymeric microparticles, such as 1% to 20 % by weight, such as 3% to 7 % by weight.

The components used to prepare the polymeric microparticles can further comprise one or more copolymerizable ethylenically unsaturated monomers which are chemically different from the polyoxyalkylene acrylates and nitrile functional materials, i.e., have at least one element or amount of an element which is different from the polyoxyalkylene acrylates and nitrile functional materials, amide functional polymers and carbamate functional materials. The polymeric microparticles can be self-crosslinking, for example by forming the polymeric microparticles from acrylic monomers capable of internally crosslinking such as n-alkoxyacrylamide, or crosslinked by reaction with suitable crosslinking materials included in the film-forming composition. The polymeric microparticles can be cationic, anionic or nonionic.

Non-limiting examples of useful ethylenically unsaturated carboxylic acid monomers include (meth)acrylic acid, acryloxypropionic acid, crotonic acid, fumaric acid, monoalkyl esters of fumaric acid, maleic acid, monoalkyl esters of maleic acid, itaconic acid, monoalkyl esters of itaconic acid and mixtures thereof.

Non-limiting examples of other useful ethylenically unsaturated vinyl monomers include alkyl esters of acrylic and methacrylic acids, such as methyl acrylate, ethyl acrylate, methyl methacrylate, ethyl methacrylate, butyl acrylate, butyl methacrylate, 2-ethylhexyl acrylate, 2-ethylhexyl methacrylate, 2-hydroxyethyl acrylate, 2-hydroxyethyl methacrylate, hydroxypropyl methacrylate, ethylene glycol dimethacrylate, isobornyl methacrylate and lauryl methacrylate; vinyl aromatics such as styrene and vinyl toluene; acrylamides such as N-butoxymethyl acrylamide; acrylonitriles; dialkyl esters of maleic and fumaric acids; vinyl and vinylidene halides; vinyl acetate; vinyl ethers; allyl ethers; allyl alcohols; derivatives thereof and mixtures thereof.

Generally, the ethylenically unsaturated monomer(s) may comprise 1% to 85% by weight based on the monomeric weight of the components used to prepare the polymeric microparticles, such as 40% to 80% by weight, such as 50% to 70% by weight. In an embodiment, the ethylenically unsaturated monomer comprises less than 30% by weight styrene based on the monomeric weight of the components used to prepare the polymeric microparticles, such as from 1% to 25 % by weight, such as from 5% to 20 % by weight. In some embodiments, the coating composition may be substantially free of styrene. In some embodiments, the coating composition may be completely free of styrene.

The polymeric microparticles can include hydroxyl functional groups, which are often incorporated into the polymer by including one or more hydroxyl functional monomers in the reactants used to produce the copolymer. Useful hydroxyl functional monomers include hydroxyalkyl acrylates and methacrylates, such as those having 2 to 6 carbon atoms in the hydroxy alkyl group, such as hydroxyethyl acrylate, hydroxypropyl acrylate, 4-hydroxybutyl acrylate, hydroxy functional adducts of caprolactone and hydroxyalkyl acrylates, and corresponding methacrylates. Including hydroxyl functional materials in the polymer microparticle components can provide fast drying under ambient conditions (25°C and atmospheric pressure).

Urethane functional groups can be included in the polymeric microparticles by copolymerizing the monomers with a urethane functional monomer such as the reaction product of an ethylenically unsaturated isocyanate with an alkanol.

Urea functional groups can be included in the polymeric microparticles by copolymerizing the monomers with a urea functional monomer such as hydroxyethyl ethylene urea (meth)acrylate.

Ureido functional groups can be included in the polymeric microparticles by copolymerizing the monomers with a ureido functional monomer such as ethylimidazolidone (meth)acrylates and ethylimidazolidone (meth)acryamides. Useful ureido functional materials include the NORSOCRYL ureido functional monomers (which also can contain other acrylate monomers) which are commercially available from Elf Atochem.

In an embodiment, the polymeric microparticles have a glass transition temperature of -20°C to +60°C and are prepared from a non-migrating surfactant prepared from a phosphonate ester and, in embodiments, an acrylate-reactive functional material, such as Maxemul 6106 and Sinonate 1204P. The amount of phosphonate ester materials and acrylate-reactive functional materials can range from 0.5% to 4.5% by weight based on the monomeric weight of the components used to prepare the polymeric microparticles, such as from 1.2% to 2.5% by weight.

In another embodiment, the polymeric microparticles have a glass transition temperature of greater than -10°C and are prepared from one or more nitrile functional materials and one or more hydroxyl functional materials, such as acrylonitrile and hydroxyethyl methacrylate. The weight ratio of nitrile functional material to hydroxyl functional material can range from 5:95 to 95:5, such as 10:3 to 10:4.

In an alternate embodiment, acrylic polymeric microparticles having a glass transition temperature greater than +10°C, such as greater than +20°C, are prepared from one or more hydroxy functional materials such as hydroxyethyl methacrylate; one or more acid functional materials such as (meth)acrylic acid; and one or more acrylate monomers such as butyl acrylate and methyl methacrylate. These acrylic polymeric microparticles may be generally uniform, i.e., not core-shell. In this embodiment, the amount of hydroxy functional materials used to prepare the microparticles can range from 1% to 25 % by weight based on the monomeric weight of the components used to prepare the polymeric microparticles; the amount of acid functional materials can range from 0.1% to 10% by weight based on the monomeric weight of the components used to prepare the polymeric microparticles; and the amount of acrylate monomers can range from 65% to 98.9 % by weight based on the monomeric weight of the components used to prepare the polymeric microparticles. Other components which are useful in forming the polymeric microparticles include polyesters, surfactants, initiators, chain transfer agents and solvents. Suitable polyesters include hydroxy functional ethylenically unsaturated polyesters. Useful surfactants include sodium lauryl sulfate. Examples of useful chain transfer agents include tertiary alkyl mercaptans, mercaptoethanol, ethanol and isopropanol. Suitable solvents include butyl ether of dipropylene glycol, methyl ether of propylene glycol and xylene.

The components of the polymeric microparticles can be present as a blend or can be the polymerization reaction product of the components. Methods for polymerizing acrylic monomers with themselves and/or other addition polymerizable monomers and preformed polymers are well known to those skilled in the art of polymers and further discussion thereof is not believed to be necessary in view of the present disclosure. For example, polymerization of the acrylic monomer can be carried out in aqueous or organic solvent solution such as xylene, in emulsion, or in aqueous dispersion. See Kirk-Othmer, Encyclopedia of Chemical Technology, (1963) Vol. 1 at page 305. The acrylic polymer may be prepared by emulsion polymerization. The polymerization can be effected by means of a suitable initiator system.

The number average molecular weight (Mₙ) of the polymeric microparticles can range from 1000 grams per mole to 50,000 grams per mole, such as from 2,000 grams per mole to 15,000 grams per mole, as determined by gel permeation chromatography using a polystyrene standard. The weight average molecular weight (M_{w}) of the polymeric microparticles can range from 50,000 grams per mole to 500,000 grams per mole, such as 110,000 grams per mole to 190,000 grams per mole, as determined by gel permeation chromatography using a polystyrene standard in tetrahydrofuran (THF). The glass transition temperature of the polymeric microparticles can range from -50°C to +120°C, such as from -20°C to +60°C, such as from 0°C to +50°C.

The acid functional groups can be neutralized using amines such as dimethylethanolamine, ammonia, triethanolamine, dimethylethyl ethanolamine or N',N'-dimethyl aminopropylamine or alkali metal salts such as sodium or potassium hydroxide. Generally, the polymeric microparticles are present in an amount ranging from 50% to 100 % by weight based on a total weight of resin solids of the coating composition, such as from 70% to 95% by weight, such as from 80% to 90% by weight.

In an embodiment, the dispersion of polymeric microparticles in an aqueous medium may be prepared by conventional emulsion polymerization techniques which are well known to those skilled in the art. The aqueous microparticle dispersions can be prepared by conventional emulsion batch process or a continuous process. In one example of a batch process, the unreacted microdispersion is fed over a period of 1 hour to 4 hours into a heated reactor initially charged with water. The initiator can be fed in simultaneously, it can be part of the microdispersion or it can be charged to the reactor before feeding in the microdispersion. The optimum temperature depends upon the specific initiator being used. The length of time typically ranges from 2 hours to 6 hours. The temperature of reaction can range from 25°C to 90°C.

In an embodiment, water and a small portion of the alkyl acrylate monomers may be charged to a reactor with a small amount of surfactant and free radical initiator to form a seed. A preemulsion of the remaining monomers, surfactant and water are fed along with the initiator over a prescribed period of time (3 hours) at a reaction temperature of 80°C to 85°C using a nitrogen blanket. After a one hour hold, upon completion of the monomer feed, a post redox feed to reduce residual free monomer (including hydrogen peroxide/isoascorbic acid) is added to the reactor. The latex product is neutralized to a pH of 7 to 8.

In order to conduct the polymerization of the ethylenically unsaturated monomers, a free radical initiator is usually present. Both water soluble and oil soluble initiators can be used. Since the addition of certain initiators, such as redox initiators, can result in a strong exothermic reaction, it is generally desirable to add the initiator to the other ingredients immediately before the reaction is to be conducted. Examples of water soluble initiators include ammonium peroxydisulfate, potassium peroxydisulfate and hydrogen peroxide. Examples of oil soluble initiators include t-butyl hydroperoxide, dilauryl peroxide, t-butyl perbenzoate and 2,2'-azobis(isobutyronitrile). Redox initiators such as ammonium peroxydisulfate/sodium metabisulfite or t-butylhydroperoxide/isoascorbic acid may be utilized herein.

Alternatively, the dispersion of polymeric microparticles in an aqueous medium can be prepared by a high stress technique such as microfluidization by use of a MICROFLUIDIZER^{®} emulsifier which is available from Microfluidics Corporation in Newton, Mass. The MICROFLUIDIZER^{®} high pressure impingement emulsifier is disclosed in U.S. Pat. No. 4,533,254, which is hereby incorporated by reference. The device consists of a high pressure (up to 1.4 × 10⁵ kPa (20,000 psi)) pump and an interaction chamber in which emulsification takes place. The pump forces the mixture of reactants in aqueous medium into the chamber where it is split into at least two streams which pass at very high velocity through at least two slits and collide, resulting in the particulation of the mixture into small particles. Generally, the reaction mixture is passed through the emulsifier once at a pressure of between 3.5 × 10⁴ and 1 × 10⁵ kPa (5,000 and 15,000 psi). Multiple passes can result in smaller average particle size and a narrower range for the particle size distribution. When using the aforesaid MICROFLUIDIZER^{®} emulsifier, stress is applied by liquid-liquid impingement as has been described. However, it should be understood that, if desired, other modes of applying stress to the pre-emulsification mixture can be utilized so long as sufficient stress is applied to achieve the requisite particle size distribution, that is, such that after polymerization less than 20 percent of the polymer microparticles have a mean diameter greater than 5 microns. For example, one alternative manner of applying stress would be the use of ultrasonic energy.

Once the polymerization is complete, the resultant product is a stable dispersion of polymer microparticles in an aqueous medium. The aqueous medium, therefore, is substantially free of water soluble polymer. The resultant polymer microparticles are, of course, insoluble in the aqueous medium. As used herein, "substantially free" means that the aqueous medium contains no more than 30 percent by weight of dissolved polymer, such as no more than 15 percent. By "stably dispersed" is meant that the polymer microparticles do not settle upon standing and essentially do not coagulate or flocculate during manufacturing or on standing.

The particle size of the polymer microparticle dispersion may be uniformly small, i.e., after polymerization less than 20 percent of the polymer microparticles have a mean diameter which is greater than 5 microns, such as greater than 1 micron. Generally, the microparticles have a mean diameter from 0.01 microns to 10 microns. The mean diameter of the particles after polymerization may range from 0.05 microns to 0.5 microns. The particle size can be measured with a particle size analyzer such as the Coulter N4 instrument commercially available from Coulter. The instrument comes with detailed instructions for making the particle size measurement. However, briefly, a sample of the aqueous dispersion is diluted with water until the sample concentration falls within specified limits required by the instrument. The measurement time is 10 minutes.

Generally, the microparticle dispersions are materials of relatively low viscosity. Dispersions can be prepared directly with a total solids content of from 20% to 70%. The molecular weight of the polymer and viscosity of the claimed aqueous dispersions are independent of each other.

The microparticle can be either internally crosslinked or uncrosslinked. When the microparticles are internally crosslinked, they are referred to as a microgel. Monomers used in preparing the microparticle so as to render it internally crosslinked include those ethylenically unsaturated monomers having more than one site of unsaturation, such as ethylene glycol dimethacrylate, allyl methacrylate, hexanediol diacrylate, methacrylic anhydride, tetraethylene glycol diacrylate, tripropylene glycol diacrylate, and the like.

Microparticles can have a core/shell morphology or interpenetrating morphology if suitable hydrophilic ethylenically unsaturated monomer(s) are included in the mixture of monomer(s) used to produce reaction product. Due to its hydrophobic nature, the hydrophobic polymer will tend to be incorporated into the interior, or core, of the microparticle and the hydrophilic monomer(s) will tend to be incorporated into the exterior, or shell, of the microparticles. Suitable hydrophilic monomers include, for example, acrylic acid, methacrylic acid, vinyl acetate, N-methylol acrylamide, hydroxyethyl acrylate, and hydroxypropyl methacrylate. As mentioned in U.S. Pat. No. 5,071,904, it may be desirable to add water soluble monomer(s) after the other components of the dispersion of polymeric microparticles have been particularized into microparticles.

In order to obtain the advantages of a high solids waterborne coating composition, the coating composition should have sufficiently low viscosity to allow adequate atomization of the coating during spray application. The viscosity of the primary coating composition can be controlled partially by choosing components and reaction conditions that control the amount of hydrophilic polymer in the aqueous phase and in the shell of the polymeric microparticles. Interactions among microparticles, and consequently the rheology of coatings containing them, are greatly affected by the ionic charge density on the surface of the microparticles. Charge density can be increased by increasing the amount of acrylic acid polymerized into the shell of a microparticle. The amount of acrylic acid incorporated into the shell of a microparticle can also be increased by increasing the pH of the aqueous medium in which the polymerization takes place.

The coating composition can further comprise one or more polymeric film-forming materials chemically different from the polymeric microparticles discussed above. Useful polymeric film-forming materials include polyepoxides, polyurethanes, polyamides, polyesters, polyacrylates, polyvinyl chlorides and mixtures and copolymers thereof.

Useful polyepoxides have at least two epoxide or oxirane groups per molecule and include epoxy-functional oligomers, polymers and/or copolymers. Generally, the epoxide equivalent weight of the epoxy-functional polymer can range from 70 to 4,000, as measured by titration with perchloric acid and quaternary ammonium bromide using methyl violet as an indicator. Suitable epoxy-functional polymers can be saturated or unsaturated, cyclic or acyclic, aliphatic, alicyclic, aromatic or heterocyclic. The epoxy-functional polymers can have pendant or terminal hydroxyl groups, if desired. They can contain substituents such as halogen, hydroxyl, and ether groups. A useful class of these materials include polyepoxides comprised of epoxy polyethers obtained by reacting an epihalohydrin (such as epichlorohydrin or epibromohydrin) with a di- or polyhydric alcohol in the presence of an alkali, such as diglycidyl ethers of bisphenol A, for example EPON^{®} 828 epoxy resin which is commercially available from Shell Chemical Company.

Useful thermoplastic polymeric film-forming materials include polyvinyl acetate; aromatic vinyl polymers; vinyl copolymers having vinyl aromatic hydrocarbons as monomer components such as polystyrene, styrene-butadiene copolymers, styrenedivinylbenzene copolymers and styrene-acrylonitrile copolymers; saturated polyesters including saturated aliphatic polyesters such as polyneopentyl adipate, polypropylene adipate and poly epsilon-caprolactone; polyacrylates such as polyalkyl (meth)acrylates having alkyl groups with 1-8 carbon atoms, polymethacrylates or polyalkyl(meth)acrylates obtained by polymerization of methyl methacrylate, isobutyl methacrylate and 2-ethylhexyl acrylate; saturated polyester urethanes; polybutadienes; polyvinyl chlorides and polyvinyl chloride/acetates. Useful substantially saturated polyesters are prepared from polyfunctional acids and polyhydric alcohols by methods such as are disclosed in U.S. Pat. No. 4,739,019 at column 3, line 22 through column 5, line 15.

In an embodiment, a polyacrylate film-forming material such as ACRONAL DS 3502 polyacrylate copolymer emulsion prepared from methyl acrylate, butyl acrylate, methyl methacrylate and methacrylic acid is included in the coating composition. See ACRONAL DS 3502 Product Bulletin (November 1998), which is hereby incorporated by reference.

Generally, the film-forming material is present in the coating composition in an amount ranging from 1% to 40 % by weight based on the total resin solids of the composition, such as 5% to 30% by weight.

The coating composition further comprises one or more fillers for improving the vibration and sound damping capabilities of the coating. Useful fillers include mica, powdered slate, montmorillonite flakes, glass flakes, metal flakes, graphite, graphene, talc, iron oxide, clay minerals, cellulose fibers, mineral fibers, carbon fibers, glass or polymeric fibers or beads, ferrite, calcium carbonate, calcium magnesium carbonate, calcium silicate, barytes, ground natural or synthetic rubber, silica, aluminum hydroxide, alumina and mixtures thereof.

The filler material comprise 40% to 80% by weight based on total weight of the coating composition.

Additionally, the coating composition may further comprise a natural wax (which are typically esters of fatty acids and long chain alcohols), a synthetic wax, or combinations thereof. Examples of natural waxes may include beeswax (a myricyl palmitate ester), spermaceti wax (a cetyl palmitate ester), lanolin wax (a sterol ester), plant wax (which contain mixtures of unesterified hydrocarbons) such as carmauba wax (a myricyl cerotate ester) and epicuticular wax (a mixture of substituted long-chain aliphatic hydrocarbons), and combinations thereof. Examples of synthetic wax (which are long-chain hydrocarbons without functional groups) and paraffin wax (which are mixtures of saturated n- and isoalkanes, naphthenes, and alkyl- and naphthene-substituted aromatic compounds), or combinations thereof. Examples of synthetic waxes may include Polywax 600 (a long-chain polyethylene), Bareco Be Square 165 and 175 (which are mixtures of paraffinic, isoparaffinic, and naphthenic hydrocarbons), and Crayvallac WN 1135 (which is a long-chain polypropylene).

The wax material can comprise up to 10 % by weight based on total weight of the coating composition, such as 2.5% to 7% by weight.

Additionally, one or more plasticizers can be included in the dispersion phase with these polymers and copolymers. Non-limiting examples of suitable plasticizers include adipates, benzoates, glutarates, isophthalates, phosphates, polyesters, sebacates, sulfonamides and terephthalates. The amount of plasticizer can range from 0.1% to 50% by weight based on the total weight of the coating composition.

The compositions of the present invention can include a variety of optional ingredients and/or additives that are somewhat dependent on the particular application of the composition, such as dyes or pigments such as carbon black or graphite, reinforcements, thixotropes, accelerators, surfactants, extenders, stabilizers, corrosion inhibitors, diluents, blowing agents and antioxidants. Suitable thixotropes include fumed silica, bentonite, stearic acid-coated calcium carbonate, fatty acid/oil derivatives and associative urethane thickeners such as Acrysol RM-8 which is commercially available from Rohm and Haas. Thixotropes may be generally present in an amount of up to 20% by weight based on the total weight of the coating composition. Optional additional ingredients such as carbon black or graphite, blowing agents, expandable polymeric microspheres or beads, such as polypropylene or polyethylene microspheres, surfactants and corrosion inhibitors like barium sulfate are generally present in an amount of less than 10 % by weight based on the total weight of the composition.

The viscosities of these coating products are application-specific based on type of equipment used, required film thickness and sag resistance. The viscosity of the coating compositions may be greater than 1000 centipoise ("cp"), measured at 2 RPM with a #7 spindle Brookfield measurement at ambient temperature (25°C), such as from such as from 1000 cp to 1,000,000 cp. Sprayable compositions may have viscosities below 100,000 cp at 20 RPM reading on the Brookfield viscometer at ambient temperature (25°C).

In certain embodiments, the aqueous dispersion may be present in the coating composition in an amount of from 10% to 80% by weight based on the total weight of the coating composition, such as from 15% to 50The filler is present in the coating composition in an amount from 40% 80 % by weight based on the total weight of the coating composition. In certain embodiments, the weight ratio of the aqueous dispersion to the filler in the coating composition may range from 1:9 to 4: 1, such as from 1.5:8 to 5:4. The coating composition can be prepared by mixing the polymeric microparticle dispersion with the other components of the coating composition in a high energy vacuum mixer such as Dual Disperser Model HHL-2-1000 commercially available from Hockmeyer.

The coating composition described above may be applied alone or as part of a coating system that can be deposited onto a number of different substrates. The coating system typically comprises a number of coating layers. A coating layer is typically formed when a coating composition that is deposited onto the substrate is substantially cured by methods known in the art (e.g., by thermal heating). It is noted that the coating composition described above can be used in one or more of the coating layers described in the following paragraphs.

The compositions can be applied to the surface of a substrate in a number of ways, including spraying, extrusion, or by hand with a blade. Useful substrates include those formed from metal, polymers, such as thermoset materials and thermoplastic materials, and combinations of metal and polymeric substrates. Suitable metal substrates that can be coated according to the present invention include ferrous metals such as iron, steel, and alloys thereof, non-ferrous metals such as aluminum, zinc, magnesium and alloys thereof, and combinations thereof. The substrate may be formed from cold rolled steel, electrogalvanized steel such as hot dip electrogalvanized steel or electrogalvanized iron-zinc steel, aluminum or magnesium. The metal substrate to be treated can be bare, pretreated or prepainted (for example by electrocoating) prior to application of the coating.

Useful thermoset materials include polyesters, epoxides, phenolics, polyurethanes such as reaction injected molding urethane (RIM) thermoset materials and mixtures thereof. Useful thermoplastic materials include thermoplastic polyolefins such as polyethylene and polypropylene, polyamides such as nylon, thermoplastic polyurethanes, thermoplastic polyesters, acrylic polymers, vinyl polymers, polycarbonates, acrylonitrile-butadiene-styrene (ABS) copolymers, EPDM rubber, copolymers and mixtures thereof.

In certain embodiments, the coating composition is applied onto a substrate at a wet film thickness ranging from 1 mm to 7 mm depending on the damping requirements of the user. Typically, a thicker film will result in higher damping properties. After application to the substrate, the coating composition can be air-dried or it can be subjected to a baking step, which can occur between a temperature ranging from 121°C to 193°C for a time period ranging from 5 minutes to 1 hour. In some embodiments, additional baking steps could be needed to accommodate specific paint system configurations. The dry film thickness of the coating layer can increase 0% to 300% from the applied wet film thickness depending on the speed of drying and the heat applied to the coating composition. In certain embodiments, the microparticles are present in the cured coating in an amount from 5% to 60% by weight based on the total weight of the coating, such as from 10% to 30%. In certain embodiments, the filler may be present in the cured coating in an amount from 40% to 95% by weight based on the total weight of the coating, such as from 60% to 85%. After cure, in certain embodiments, the weight ratio of microparticles to filler may range from 1:19 to 3:2, such as from 1:8.5 to 1:2. After cure, the coating layer demonstrates a composite damping Loss Factor of 0.05 or greater at a frequency ranging from 100 to 6,300 HZ at 10°C or greater. Moreover, after the coating composition is applied onto a surface and cured, the cured coating composition or coating layer may be substantially free, or in some cases, completely free, of defects. As used herein, "substantially free of defects" means that the cured coating layer contains no more than one pita gaps in an area of 75 mm² and "completely free of defects" means that no pita gaps are found in such an area. The coatings described above, when applied to a substrate and cured, can provide the substrate with water resistance and can provide mudcrack resistant coatings which provide sound and/or vibration damping through the substrate. Water resistance, as used herein, means a decrease in water absorption and/or an increase in water desorption by the cured composition at a given temperature as compared to the water absorption or desorption, respectively, by a cured composition that does not contain the non-migrating surfactant described above, where the change is measured by a change in weight of the cured coating.

The present invention will now be illustrated by the following specific, non-limiting example.

### EXAMPLES

Preparation of examples of the coating composition and comparative examples is described below. Each of the raw materials listed below are in grams (g). While the examples show the use of oleyl alcohol ethoxylate phosphate (Maxemul 6106) as the non-migrating surfactant, it will be understood that other acrylate-reactive phosphonate esters could be substituted for oleyl alcohol ethoxylate phosphate. Similarly, while the examples show the use of a modified propylene wax (Crayvallac WN 1135), it will be understood that other waxes could be substituted for the modified propylene wax.

A latex composition was prepared using the materials listed in Table 1 in a four neck round bottom flask equipped with a thermometer, mechanical stirrer, condenser, nitrogen sparge and a heating mantle. Water and a small portion of pre-emulsion (under 5% of total pre-emulsion) were charged to the reactor with a small amount of free surfactant (such as ALIPAL) and ammonium persulfate free radical initiator to form a seed. A pre-emulsion of the remaining monomers, surfactant and water were fed along with the initiator over a prescribed period of time (3 hours) at a reaction temperature of 80-85°C using a nitrogen blanket. In the case of Latex Examples 3-6, a second pre-emulsion of an addition 25% of monomers, surfactant, and water were fed along with a second initiator feed over a prescribed period of time (1/2 hour) at a temperature of 80-85°C using a nitrogen blanket. The latex was neutralized to a pH of 8 with dimethyl amino ethanol and antibacterial agent was added. Anti-foam agent may be added to the latex. The final pH of each of the lattices was about 7.5-8.5, the nonvolatile content was 35-40%, the Brookfield viscosity was 50-200 cps (spindle #1, 50 rpm) and the particle size was 1000-2000 angstroms.

**Table 1.**

| **Latex Composition #** | **1 (comparative)** | **2** | **3** | **4** | **5 (comparative)** | **6** | **7** |
|---|---|---|---|---|---|---|---|
| Monomer Components (grams) | | | | | | | |
| Methyl methacrylate | 720 | 720 | 131.1 | 163.3 | 416.0 | 416.0 | 475.0 |
| Butyl acrylate | 1240 | 1240 | 95.6 | 679.7 | 490.0 | 490.0 | 1003.3 |
| Butyl methacrylate | | | 394.7 | | | | |
| Bisomer S20W / MPEG 2000 MA¹ | | | 31.0 | 35.0 | 31.4 | 31.4 | 160.1 |
| Styrene | | | 336.0 | 656.3 | 605.0 | 605.0 | |
| Ethylhexyl acrylate | | | 402.9 | | | | |
| Cyclohexyl methacrylate | | | 75.1 | | | | |
| Hydroxylethyl methacrylate | | | 147.5 | 83.6 | 82.3 | 82.3 | |
| Methacrylic acid | 45.2 | 45.2 | 31.4 | 32.7 | 32.7 | 32.7 | 20.3 |
| Other Components (grams) | | | | | | | |
| AOT-75² | | 10.2 | 10.0 | 2.9 | | 13.8 | 4.8 |
| Maxemul 6106³ | | 30 | 20.0 | 31.9 | | 24.0 | 20.0 |
| Rhodapex AB/20⁴ | | | | | | | |
| ALIPAL CO436⁵ | 70 | | | | 40.1 | | |
| IGEPAL CO-430⁶ | | | | | 6.0 | | |
| Ammonium persulfate | 12.4 | 12.4 | 6.0 | 6.0 | 6.0 | 6.0 | 6.4 |
| BYK-032⁷ | | 0.8 | | 3.1 | 3.1 | 3.1 | 0.5 |
| FOAMASTER 649⁸ | 0.8 | | | | | | |
| PROXEL GXL⁹ | | | | | | | |
| Acticide MBS¹⁰ | 12 | 12 | 45.0 | 81.2 | 12.0 | 22.0 | 8.0 |
| Volatiles (grams) | | | | | | | |
| Dimethyl amino ethanol | 34.4 | 34.4 | 13.7 | 13.7 | 13.7 | 13.7 | 17.3 |
| Deionized water | 1877.6 | 2456 | 2396.5 | 2396.5 | 2387.9 | 2390.9 | 2284.2 |
| Calculated Tg (°C) | -10.0 | -10.0 | 19.0 | 30.0 | 50.0 | 50.0 | -18 |

| | | | | | | | |
|---|---|---|---|---|---|---|---|
| 1: Methyl (pPEG=2000 g/mol) methacrylate 2: sodium bis(2-ethylhexyl) sulfosuccinate 3: Oleyl alcohol ethoxylate phosphate from Croda. 4: Ammonium salt of sulfated alcohol ethoxylate 5: Ammonium nonoxynol-4-sulfate 6: Nonyl phenol ethoxylate 7: Proprietary hydrocarbon from BYK Chemie, Inc. 8: Proprietary hydrocarbon from BASF 9: Antibacterial from Arch Chemicals, Inc. 10: Antibacterial from Thor, Inc. | | | | | | | |

The latex compositions described in Table 1 or commercially available acrylic latexes (see acrylic latexes 3a and 4a in Table 2) were used in the coating compositions described in Tables 2 and 3, below. The listed ingredients were mixed at low agitation in a container using an air-driven motor. The ingredients were added to the container in the order shown in Tables 2 and 3, and the mixing speed was increased to maintain a vortex throughout the addition.

**Table 2.**

| Component | Comp. Ex. 1 | Ex. 2 | Comp. Ex. 3 | Ex. 4 | Comp. Ex. 5 | Ex. 6 | Comp. Ex. 7 | Ex. 8 |
|---|---|---|---|---|---|---|---|---|
| Acrylic Latex¹ | 66.98 | - | - | - | - | - | - | - |
| Acrylic Latex² | - | 66.98 | - | - | - | - | - | - |
| Acrylic Latex^{3a} | - | - | 66.98 | - | - | - | - | - |
| Acrylic Latex³ | - | - | - | 66.98 | - | - | - | - |
| Acrylic Latex^{4a} | - | - | - | - | 66.98 | - | - | - |
| Acrylic Latex⁴ | - | - | - | - | - | 66.98 | - | - |
| Acrylic Latex⁵ | - | - | - | - | - | - | 66.98 | - |
| Acrylic Latex⁶ | - | - | - | - | - | - | - | 66.98 |
| Urethane diol⁷ | 3.88 | 3.88 | 3.88 | 3.88 | 3.88 | 3.88 | 3.88 | 3.88 |
| BYK 032⁸ | 0.96 | 0.96 | 0.96 | 0.96 | 0.96 | 0.96 | 0.96 | 0.96 |
| Disperbyk-199⁹ | 0.32 | 0.32 | 0.32 | 0.32 | 0.32 | 0.32 | 0.32 | 0.32 |
| Santicizer 278¹⁰ | 0.66 | 0.66 | 0.66 | 0.66 | 0.66 | 0.66 | 0.66 | 0.66 |
| Wollatonite FW325¹¹ | 119.08 | 119.08 | 119.08 | 119.08 | 119.08 | 119.08 | 119.08 | 119.08 |
| Raven 410¹² | 0.16 | 0.16 | 0.16 | 0.16 | 0.16 | 0.16 | 0.16 | 0.16 |
| Expancel 031 DU 40¹³ | 0.3 | 0.3 | 0.3 | 0.3 | 0.3 | 0.3 | 0.3 | 0.3 |
| Acrysol ASE-60¹⁴ | 0.8 | 0.8 | 0.8 | 0.8 | 0.8 | 0.8 | 0.8 | 0.8 |
| Byk-425¹⁵ | 0.58 | 0.58 | 0.58 | 0.58 | 0.58 | 0.58 | 0.58 | 0.58 |

| | | | | | | | | |
|---|---|---|---|---|---|---|---|---|
| 1: Resin synthesis example 1. 2: Resin synthesis example 2. 3a: Acrylic latex with 19°C Tg available from PPG Industries, Inc. 3: Resin synthesis example 3. 4a: Acrylic latex with 30°C Tg available from PPG Industries, Inc. 4: Resin synthesis example 4. 5: Resin synthesis example 5. 6: Resin synthesis example 6. 7: Reaction product of propylene carbonate and JEFFAMINE 400, prepared as in Example A of U.S. Patent No. 7,288,595. 8: Defoamer from BYK Chemie. 9: Dispersant from BYK Chemie. 10: Benzyl phthalate plasticizer available from Ferro Corporation. 11: Calcium silicate mineral available from Nordkalk Corporation. 12: Carbon black powder available from Colubian Chemicals. 13: Expandable organic hollow beads available from Expancel Inc. 14: Aqueous acrylic rheology modifier available from Rohm and Haas Corporation. 15: Urethane rheology modifier available from BYK Chemie. | | | | | | | | |

**Table 3.**

| Component | Ex. 6 | Ex. 9 |
|---|---|---|
| Acrylic Latex¹ | 66.98 | 66.98 |
| Urethane diol² | 3.88 | 3.88 |
| BYK 032³ | 0.96 | 0.96 |
| Disperbyk-199⁴ | 0.32 | 0.32 |
| Santicizer 278⁵ | 0.66 | 0.66 |
| Wollatonite FW325⁶ | 119.08 | 119.08 |
| Crayvallac WN 1135⁷ | 0 | 6.0 |
| Raven 410⁸ | 0.16 | 0.16 |
| Expancel 031 DU 40⁹ | 0.3 | 0.3 |
| Acrysol ASE-60¹⁰ | 0.8 | 0.8 |
| Byk-425¹¹ | 0.58 | 0.58 |

| | | |
|---|---|---|
| 1: Resin synthesis example 4 2: Reaction product of propylene carbonate and JEFFAMINE 400, prepared as in Example A of U.S. 7,288,595 3: Defoamer from BYK Chemie 4: Dispersant from BYK Chemie 5: Benzyl phthalate plasticizer available from Ferro Corporation 6: Calcium silicate mineral available from Nordkalk Corporation. 7: Modified propylene wax available from Cray Valley USA 8: Carbon black powder available from Colubian Chemicals 9: Expandable organic hollow beads available from Expancel Inc. 10: Aqueous acrylic rheology modifier available from Rohm and Haas Corporation 11: Urethane rheology modifier available from BYK Chemie | | |

The water resistance of the coating compositions described in Tables 2 and 3 was determined as follows. Draw downs of the coating compositions described in Tables 2 and 3 were made on a 105 mm x 190 mm electrocoated steel panel. Each panel was weighed and recorded and a template of 50 mm wide and 2.5 mm thick was used to draw down each coating to 150 mm in length in the center of the panel. Each draw down was air dried for 15 minutes and then the coated panel was placed in a 160°C oven for 15 minutes. The panel was then kept in ambient condition for 10 minutes before being returned to the 160°C oven for 20 minutes. The panel was again kept in ambient condition for 10 minutes and then placed in a 140°C oven for 20 minutes. The baked panel was stored at room temperature for 24 hours before testing.

Each baked panel was weighed and the weight was recorded before the panel was immersed in water (the initial panel weight). Each test panel was horizontally immersed in a de-mineralized water bath at a depth of 100mm at room temperature. The panel was removed from the water bath according to a specified schedule. After removing the panel, the surface water was dried with a paper towel and the panel was weighed immediately. The panel was then returned to the water bath. The above process was repeated until the end of the schedule was reached. For each panel tested, the percent change in the amount of water absorbed was calculated as the difference between the weight of the panel recorded at a specified time following immersion of the panel in the immersion bath and the initial weight of that panel, divided by the initial weight of the panel, and then multiplied by 100. The percent change in water absorption of the baked panels is shown in Tables 4 and 5.

Following the water immersion described above, each panel was then kept at room temperature and weighed according to a specified schedule until completion. The percent change in the amount of water desorbed was calculated as the difference between the weight of the panel recorded at a specified time following removal of the panel from the immersion bath and the weight of that panel at the conclusion of the immersion test described above, divided by the weight of the panel at the conclusion of the immersion test, and then multiplied by 100. The percent change in water desorption of the baked panels is shown in Tables 4 and 5.

**Table 4.**

| % Change in Water Absorption and Desorption | | | | | | | | | |
|---|---|---|---|---|---|---|---|---|---|
| | Hours | Ex. 1 | Ex. 2 | Ex. 3 | Ex. 4 | Ex. 5 | Ex.6 | Ex.7 | Ex. 8 |
| % Change, Water Absorption | 0.5 | 25.1 | 24.9 | 36.8 | 7.5 | 21.5 | 19.1 | 37.0 | 29.8 |
| | 1 | 76.6 | 31.1 | 40.1 | 10.0 | 38.7 | 20.9 | 38.2 | 27.6 |
| | 2 | 84.8 | 31.5 | 41.3 | 12.0 | 39.5 | 21.4 | 42.7 | 27.6 |
| | 24 | 129.1 | 33.9 | 42.1 | 22.9 | 40.7 | 22.7 | 44.0 | 28.5 |
| % Change, Water Desorption | 48 | 136.1 | 34.3 | 43.0 | 27.4 | 40.7 | 22.7 | 44.0 | 29.3 |
| | 0 | 136.1 | 34.3 | 43.0 | 27.4 | 40.7 | 22.7 | 44.0 | 29.3 |
| | 0.5 | 67.0 | 19.8 | 22.0 | 10.0 | 16.1 | 11.8 | 15.2 | 11.4 |
| | 1 | 34.9 | 15.6 | 16.7 | 7.7 | 12.3 | 8.8 | 9.8 | 7.4 |
| | 2 | 15.0 | 11.3 | 11.5 | 4.9 | 8.2 | 5.6 | 5.0 | 3.3 |
| | 3 | 9.0 | 9.0 | 8.7 | 2.9 | 5.9 | 3.5 | 2.3 | 1.1 |
| | 4 | 4.7 | 7.4 | 5.2 | | 2.8 | 0.8 | 0.5 | -0.7 |
| | 5 | 1.1 | 5.4 | -1.1 | | 1.6 | | -1.1 | |
| | 6 | -1.5 | 3.7 | | | 0.3 | | | |

As illustrated in Table 4, the baked panels having coatings made from coating compositions containing the non-migrating surfactant (Examples 2, 4, 6, and 8) demonstrated at least a 10% decrease in water absorption after 48 hours of water immersion at room temperature compared to baked panels having coatings made from coating compositions that did not contain the non-migrating surfactant (Examples 1, 3, 5, and 7).

Furthermore, as illustrated in Table 4, the baked panels having coatings made from coating compositions containing the non-migrating surfactant (Examples 2, 4, 6, and 8) demonstrated at least a 30% increase in water desorption after 1 hour of removal from a 48 hour of water immersion at room temperature compared to baked panels having coatings made from coating compositions that did not contain the non-migrating surfactant (Examples 1, 3, 5, and 7).

**Table 5.**

| % Change in Water Absorption and Desorption | | | |
|---|---|---|---|
| | Hours | Ex. 6 | Ex. 9 |
| % Change, Water Absorption | | | |
| | 0.5 | 19.1 | 1.1 |
| | 1 | 20.9 | 2.8 |
| | 2 | 21.4 | 3.4 |
| | 24 | 22.7 | 9.0 |
| | 48 | 22.7 | 12.1 |
| % Change, Water Desorption | | | |
| | 0 | 22.7 | 12.1 |
| | 0.5 | 11.8 | 6.5 |
| | 1 | 8.8 | 4.8 |
| | 2 | 5.6 | 2.0 |
| | 3 | 3.5 | 0.6 |
| | 4 | 0.8 | |

As illustrated in Table 5, the baked panels having coatings made from coating compositions containing the non-migrating surfactant and wax (Example 9) demonstrated at least a 50% decrease in water absorption after 48 hours of water immersion at room temperature compared to baked panels having coatings made from coating compositions containing the non-migrating surfactant without wax (Example 6).

Furthermore, as illustrated in Table 5, the baked panels having coatings made from coating compositions containing the non-migrating surfactant and wax (Example 9) demonstrated at least a 30% increase in water desorption after 1 hour at room temperature following 48 hours of water immersion at room temperature compared to baked panels having coatings made from coating compositions containing the non-migrating surfactant and no wax (Example 6).

The vibration damping of each coating was measured using the Oberst ASTM Test Method E756-93 ("Standard Test Method for Measuring Vibration-Damping Properties of Materials"), Sections 3 and 10. The principal measure of sound damping in this test is loss factor, the ratio of loss modulus to storage modulus of the material. Oberst values typically range from 0.001 for uncoated steel (thickness 1 millimeter) (if the steel panel is struck, one would hear a "clang") to 0.01 ("bong") to 0.1 ("bunk") to 0.5 ("thud") for increasingly efficient coatings.

The Oberst test measures the sound loss factor of the coating-substrate composite. Each test sample was applied to an Oberst Bar, which is a metal bar formed from special oil-hardening ground flat stock, AISI/SAE GRD 0-1, 1 mm thick, 10 mm wide and 230 mm long from McMaster-Carr, and cured as described above. The weight of each cured coating over 200 mm coat length was 6 +-.0.1 grams. The Oberst loss factor values were normalized to 6 grams (3 kg/m²) for comparison. Composite damping loss factors were measured over a temperature range of 0 to 50°C and at a frequency of 200 Hz.

**Table 6.**

| Composite Loss Factor @ 200 Hz | | | | | | | | |
|---|---|---|---|---|---|---|---|---|
| Temperature | Ex. 1 | Ex. 2 | Ex.3 | Ex. 4 | Ex. 5 | Ex. 6 | Ex. 7 | Ex. 8 |
| 0°C | 0.212 | 0.142 | 0.070 | 0.079 | 0.039 | 0.045 | 0.031 | 0.031 |
| 10°C | 0.221 | 0.207 | 0.124 | 0.138 | 0.062 | 0.083 | 0.041 | 0.039 |
| 20°C | 0.113 | 0.108 | 0.160 | 0.174 | 0.129 | 0.118 | 0.059 | 0.051 |
| 30°C | 0.057 | 0.060 | 0.123 | 0.112 | 0.197 | 0.159 | 0.100 | 0.091 |
| 40°C | 0.035 | 0.039 | 0.074 | 0.058 | 0.097 | 0.130 | 0.165 | 0.139 |
| 50°C | 0.027 | 0.025 | 0.039 | 0.043 | 0.036 | 0.050 | 0.217 | 0.103 |

**Table 7.**

| Composite Loss Factor @ 200 Hz | | |
|---|---|---|
| Temperature | Ex. 6 | Ex. 9 |
| 0°C | 0.045 | 0.054 |
| 10°C | 0.083 | 0.067 |
| 20°C | 0.118 | 0.110 |
| 30°C | 0.159 | 0.152 |
| 40°C | 0.130 | 0.142 |
| 50°C | 0.050 | 0.090 |

## Claims

1. A coating composition for sound and vibration damping comprising:
(a) an aqueous dispersion of polymeric microparticles prepared from components comprising a non-migrating surfactant comprising a phosphonate ester; and
(b) a filler material comprising 40% to 80% by weight based on the total weight of the coating composition.

2. The coating composition according to claim 1, wherein the polymeric microparticles have a glass transition temperature of from -20°C to +60°C.

3. The coating composition according to claim 1, wherein the non-migrating surfactant
- comprises 0.5% to 4.5% by weight based on the monomeric weight of the components used to prepare the polymeric microparticles; or
- further comprises an acrylate-reactive functional group.

4. The coating composition according to claim 1, wherein the components used to prepare the polymeric microparticles further comprise a migrating surfactant, the migrating surfactant preferably comprises 0.1% to 1% by weight based on the monomeric weight of the components used to prepare the polymeric microparticles.

5. The coating composition according to claim 1, wherein the components from which the polymeric microparticles are prepared further comprise an ethylenically unsaturated monomer, an ester of the ethylenically unsaturated monomer, or combinations thereof.

6. The coating composition according to claim 5, wherein
- the ethylenically unsaturated monomer comprises 1% to 85% by weight based on the monomeric weight of the components used to prepare the polymeric microparticles; or
- the ethylenically unsaturated monomer comprises a (meth)acrylic monomer, a hydroxyl functional monomer, or a combination thereof; or
- the ethylenically unsaturated monomer comprises less than 30% by weight styrene based on the monomeric weight of the components used to prepare the polymeric microparticles.

7. The coating composition according to claim 1, wherein the filler material comprises graphene, calcium magnesium carbonate, calcium silicate, or combinations thereof.

8. The coating composition according to claim 1, further comprising (c) a polymeric film-forming material that is different from the components used to form the polymeric microparticles.

9. The coating composition according to claim 1, further comprising (d) wax.

10. The coating composition according to claim 9, wherein the wax comprises up to 10% by weight based on the total weight of the coating composition.

11. A coating deposited from a coating composition according to any of claims 1 or 9

12. A method for damping sound and vibration through a substrate comprising:
(a) applying to the substrate the coating composition of any of claims 1 or 9; and
(b) at least partially drying the coating composition.

13. The method according to claim 12, wherein the polymeric microparticles have a glass transition temperature of from -20°C to +60°C.

## Patentansprüche

1. Eine Beschichtungszusammensetzung zur Geräusch- und Vibrationsdämpfung enthaltend:
(a) eine wässrige Dispersion von polymeren Mikropartikeln, hergestellt aus Komponenten, enthaltend ein nicht-migrierendes oberflächenaktives Mittel umfassend einen Phosphonatester; und
(b) einen Füllstoff ausmachend 40 bis 80 Gew.-%, bezogen auf das Gesamtgewicht der Beschichtungszusammensetzung.

2. Die Beschichtungszusammensetzung gemäß Anspruch 1, wobei die polymeren Mikropartikel eine Glasübergangstemperatur von -20 °C bis +60 °C aufweisen.

3. Die Beschichtungszusammensetzung gemäß Anspruch 1, wobei das nichtmigrierende oberflächenaktive Mittel
- 0,5 bis 4,5 Gew.-%, bezogen auf das Monomergewicht der zur Herstellung der polymeren Mikropartikel verwendeten Komponenten, ausmacht, oder
- des Weiteren eine acrylatreaktive funktionelle Gruppe umfasst.

4. Die Beschichtungszusammensetzung gemäß Anspruch 1, wobei die Komponenten zur Herstellung der polymeren Mikropartikel des Weiteren ein migrierendes oberflächenaktives Mittel umfassen, wobei das migrierende oberflächenaktive Mittel bevorzugt 0,1 bis 1 Gew.-%, bezogen auf das Monomergewicht der zur Herstellung der polymeren Mikropartikel verwendeten Komponenten, ausmacht.

5. Die Beschichtungszusammensetzung gemäß Anspruch 1, wobei die Komponenten, aus denen die polymeren Mikropartikel hergestellt sind, des Weiteren ein ethylenisch ungesättigtes Monomer, einen Ester des ethylenisch ungesättigten Monomers oder Kombinationen davon umfassen.

6. Die Beschichtungszusammensetzung gemäß Anspruch 5, wobei
- das ethylenisch ungesättigte Monomer 1 bis 85 Gew.-%, bezogen auf das Monomergewicht der zur Herstellung der polymeren Mikropartikel verwendeten Komponenten, ausmacht oder
- das ethylenisch ungesättigte Monomer ein (Meth)acrylmonomer, ein hydroxyfunktionelles Monomer oder eine Kombination davon, umfasst oder
- das ethylenisch ungesättigte Monomer weniger als 30 Gew.-% Styrol, bezogen auf das Monomergewicht der zur Herstellung der polymeren Mikropartikel verwendeten Komponenten, umfasst.

7. Die Beschichtungszusammensetzung gemäß Anspruch 1, wobei der Füllstoff Graphen, Calciummagnesiumcarbonat, Calciumsilicat oder Kombinationen davon umfasst.

8. Die Beschichtungszusammensetzung gemäß Anspruch 1, des Weiteren enthaltend (c) ein polymeres filmbildendes Material, das sich von den Komponenten, die zur Herstellung der polymeren Mikropartikel verwendet wurden, unterscheidet.

9. Die Beschichtungszusammensetzung gemäß Anspruch 1, des Weiteren enthaltend (d) Wachs.

10. Die Beschichtungszusammensetzung gemäß Anspruch 9, wobei das Wachs bis zu 10 Gew.-%, bezogen auf das Gesamtgewicht der Beschichtungszusammensetzung, ausmacht.

11. Eine Beschichtung, abgeschieden aus einer
Beschichtungszusammensetzung gemäß einem der Ansprüche 1 oder 9.

12. Ein Verfahren zur Geräusch- und Vibrationsdämpfung durch ein Substrat, umfassend:
(a) Aufbringen der Beschichtungszusammensetzung gemäß einem der Ansprüche 1 oder 9 auf das Substrat und
(b) zumindest teilweises Trocknen der Beschichtungszusammensetzung.

13. Das Verfahren gemäß Anspruch 12, wobei die polymeren Mikropartikel eine Glasübergangstemperatur von -20 °C bis +60 °C aufweisen.

## Revendications

1. Composition de revêtement conçue pour l'atténuation sonore et l'amortissement des vibrations, qui comprend :
(a) une dispersion aqueuse de microparticules polymères, préparées à partir de constituants qui comportent un tensioactif non migrant comprenant un ester phosphonate,
(b) et une matière de charge, en une proportion en poids représentant 40 % à 80 % du poids total de la composition de revêtement.

2. Composition de revêtement conforme à la revendication 1, dans laquelle les microparticules polymères présentent une température de transition vitreuse valant de -20 °C à +60 °C.

3. Composition de revêtement conforme à la revendication 1, dans laquelle le tensioactif non migrant
- se trouve en une proportion de 0,5 % à 4,5 % en poids, ces pourcentages étant rapportés au poids de monomères des constituants ayant servi à préparer les microparticules polymères,
- ou comporte en outre un groupe fonctionnel apte à réagir avec un acrylate.

4. Composition de revêtement conforme à la revendication 1, dans laquelle les constituants ayant servi à préparer les microparticules polymères comportent par ailleurs un tensioactif migrant, ce tensioactif migrant se trouvant, de préférence, en une proportion de 0,1 % à 1 % en poids, ces pourcentages étant rapportés au poids de monomères des constituants ayant servi à préparer les microparticules polymères.

5. Composition de revêtement conforme à la revendication 1, dans laquelle les constituants à partir desquels sont préparées les microparticules polymères comportent par ailleurs un monomère à insaturation(s) éthylénique(s), un ester de ce monomère à insaturation(s) éthylénique(s) ou une combinaison des deux.

6. Composition de revêtement conforme à la revendication 5, dans laquelle
- le monomère à insaturation(s) éthylénique(s) se trouve en une proportion de 1 % à 85 % en poids, ces pourcentages étant rapportés au poids de monomères des constituants ayant servi à préparer les microparticules polymères,
- ou le monomère à insaturation(s) éthylénique(s) comprend un monomère (méth)acrylique, un monomère à groupe fonctionnel hydroxyle ou une combinaison des deux,
- ou le monomère à insaturation(s) éthylénique(s) comprend du styrène en une proportion de moins de 30 % en poids, ce pourcentage étant rapporté au poids de monomères des constituants ayant servi à préparer les microparticules polymères.

7. Composition de revêtement conforme à la revendication 1, dans laquelle la matière de charge est constituée de graphène, de carbonate de calcium et de magnésium, de silicate de calcium ou de combinaisons de ces substances.

8. Composition de revêtement conforme à la revendication 1, qui comprend par ailleurs (c) un matériau filmogène polymère qui est différent des des constituants ayant servi à préparer les microparticules polymères.

9. Composition de revêtement conforme à la revendication 1, qui comprend par ailleurs (d) une cire.

10. Composition de revêtement conforme à la revendication 9, dans laquelle la cire se trouve en une proportion en poids représentant jusqu'à 10 % du poids total de la composition de revêtement.

11. Revêtement déposé à partir d'une composition de revêtement conforme à n'importe laquelle des revendications 1 et 9.

12. Procédé destiné à l'atténuation sonore et l'amortissement des vibrations à travers un support, qui comporte les opérations suivantes :
(a) appliquer sur le support une composition de revêtement conforme à n'importe laquelle des revendications 1 et 9,
(b) et faire sécher, au moins partiellement, la composition de revêtement.

13. Procédé conforme à la revendication 12 dans lequel les microparticules polymères présentent une température de transition vitreuse valant de -20 °C à +60 °C.
